# EUROPEAN PATENT SPECIFICATION

(11) **EP 2 662 840 B1**
(45) Date of publication and mention of the grant of the patent: **07.04.2021**
(21) Application number: 13166365.0
(22) Date of filing: 03.05.2013
(51) Int. Cl.: G07C 9/00, B60R 25/24, H04W 12/04

(54) **Electronic key registration system**
Elektronisches Schlüsselregistrierungssystem
Système d'enregistrement de clé électronique

(30) Priority: 10.05.2012 JP 2012108548
(43) Date of publication of application: 13.11.2013
(73) Proprietor: KABUSHIKI KAISHA TOKAI RIKA DENKI SEISAKUSHO, Niwa-gun, Aichi 480-0195 (JP)
(72) Inventor: Kawamura, Daisuke, Niwa-gun, Aichi 480-0195 (JP); Iwashita, Hiroaki, Niwa-gun, Aichi 480-0195 (JP); Nagae, Toshihiro, Niwa-gun, Aichi 480-0195 (JP); Egawa, Tetsuya, Niwa-gun, Aichi 480-0195 (JP); Kimura, Akihito, Niwa-gun, Aichi 480-0195 (JP); Tobimatsu, Tadayuki, Niwa-gun, Aichi 480-0195 (JP)
(74) Representative: TBK

(56) References cited:
- US-A- 4 870 401
- US-A1- 2004 160 305
- US-A1- 2004 263 316
- US-A1- 2010 220 857

## Description

The present invention relates to an electronic key registration system that registers an electronic key to a communication subject.

In an electronic key system for a vehicle, an electronic key is registered to a controller that is installed in the vehicle. An electronic key includes, for example, a key ID or encryption key that is registered in advance to the controller. Japanese Laid-Open Patent Publication Nos. 7-61328, 2003-148018 and 2004-107959 describe examples of electronic key registration system.

Document US 2004/0263316 A1 discloses an access control system for controlling access to a vehicle and reconfiguring the vehicle to disable or enable operator smart keys is disclosed. An electronic controller in the vehicle receives signals indicating the presence of a master smart key in the vehicle. Once it determines that a master key is present, it permits one or more individual operator smart keys to be programmed. The identification numbers of these smart keys are stored in an electronic memory of the vehicle. Document US 4 870 401 A discloses an electronic key which responds to different sets of valid commands over its lifetime, depending on the state of certain circuits within the electronic key. After initial fabrication of the electronic key, the electronic key recognizes a first set of valid commands and ignores all other commands. After the electronic key is tested and a countdown circuit within the electronic key has been calibrated, the number of valid commands recognizable by the electronic key is reduced.

Document US 2010/0220857 A1 discloses a system and method for registering a secret key.

The inventors of the present invention are attempting to improve technology for reducing or obviating unauthorized registration of electronic keys and unauthorized rewriting of electronic key information registered to the controller.

It is an object of the present invention to provide an electronic key registration system that reduces or obviates unauthorized registration of electronic keys and unauthorized rewriting of electronic key information registered to the controller.

One aspect of the present invention is an electronic key registration system as defined in claim 1.

Other aspects and advantages of the present invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a schematic diagram of one embodiment of an electronic key registration system;
Fig. 2 is a timing chart of wireless signals used for communication between a vehicle and an electronic key during smart verification;
Fig. 3 is a schematic diagram illustrating initial electronic key registration;
Fig. 4 is a schematic diagram illustrating additional electronic key online registration;
Fig. 5 is a schematic diagram illustrating additional electronic key offline registration;
Fig. 6 is a schematic diagram of the electronic key before and after a registration permissible time elapses;
Fig. 7 is a schematic diagram of a verification ECU in the vehicle before and after the registration permissible time elapses; and
Fig. 8 is a schematic diagram of a monitoring unit in another example.

An electronic key registration system according to one embodiment of the present invention will now be described.

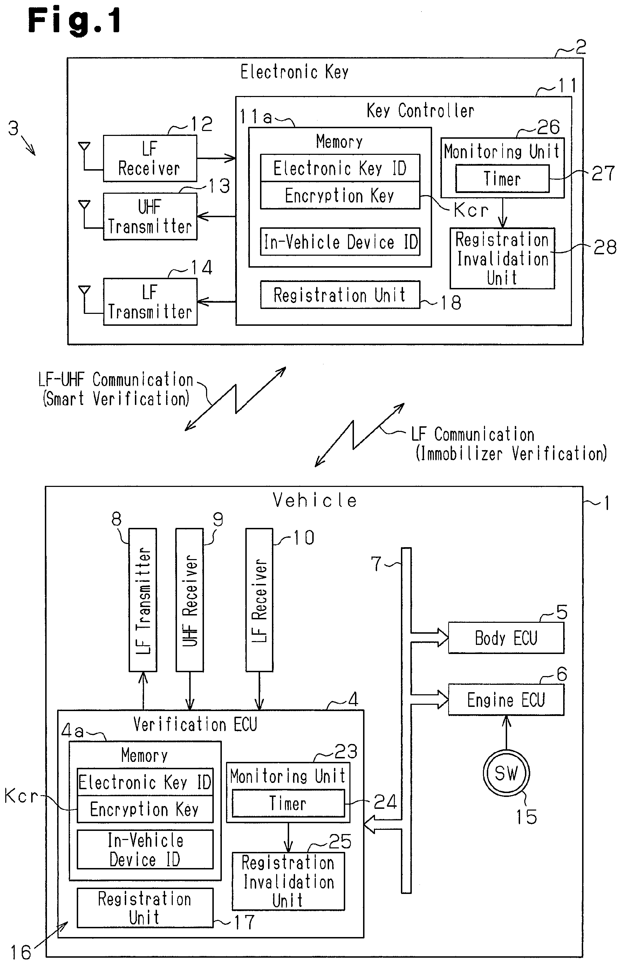

Referring to Fig. 1, an electronic key system 3 includes a verification electronic control unit (ECU) 4, which is arranged in a vehicle 1, and an electronic key 2, which includes an electronic key ID. The electronic key 2 receives a signal from the vehicle 1, and returns the electronic key ID in response. The electronic key system 3 verifies the electronic key 2 through bidirectional communication performed between the vehicle 1 and the electronic key 2. Any key may be used as the electronic key 2 as long as the key is capable of performing communication through a wireless connection. The electronic key system 3 is, for example, a key-free-operation system and an immobilizer system. The vehicle 1 is one example of a communication subject.

A verification ECU 4 receives and verifies the electronic key ID. The verification ECU 4 is connected to a bus 7 in the vehicle 1. A body ECU 5, which manages the power supplied to electronic components of the vehicle 1, and an engine ECU 6, which controls the engine, may be connected to the bus 7. The verification ECU 4 includes a memory 4a. The memory 4a stores the electronic key IDs of registered electronic keys, encryption keys Kcr (key-1, key-2, and so on), an in-vehicle device ID (vehicle ID) that is an ID unique to the vehicle 1, and the like. The encryption keys Kcr are associated with the electronic key IDs. For example, when a plurality of electronic keys are registered to the vehicle 1, multiple sets of the electronic key IDs and the encryption keys Kcr are stored in the memory 4a. The verification ECU 4 is connected to one or more communication devices. In the example of Fig. 1, a low frequency (LF) transmitter 8 for transmitting radio waves on the LF band, an ultrahigh frequency (UHF) receiver 9 for receiving radio waves on the UHF band, and an LF receiver 10 for receiving radio waves on the LF band are used as the communication devices connected to the verification ECU 4. The LF transmitter 8 includes a vehicle exterior LF transmitter, which forms a vehicle exterior communication area, and a vehicle interior LF transmitter, which forms a vehicle interior communication area. The verification ECU 4 is one example of a controller of a communication subject. The verification ECU 4 may be referred to as an electronic key registration controller.

The electronic key 2 includes a key controller 11 that controls the electronic key 2. The key controller 11 includes a memory 11a that stores the electronic key ID, the in-vehicle device ID, and an encryption key Kcr. The key controller 11 is connected to an LF receiver 12 that receives LF radio waves, a UHF transmitter 13 that transmits UHF radio waves, and an LF transmitter 14 that transmits LF radio waves.

When the vehicle 1 is parked (e.g., vehicle doors locked and engine stopped), the vehicle exterior LF transmitter 8 transmits wake signals Swk in predetermined intervals to the vehicle exterior communication area located several meters from the vehicle 1 and performs vehicle exterior smart communication. When the electronic key 2 is in the vehicle exterior communication area, the wake signal Swk activates the electronic key 2. Then, the electronic key 2 transmits an acknowledgement signal Sack1 to the vehicle 1 from the UHF transmitter 13. When the UHF receiver 9 of the vehicle 1 receives the acknowledgement signal Sack1, the verification ECU 4 transmits an in-vehicle device ID signal Svi from the vehicle exterior LF transmitter 8. Upon receipt of the in-vehicle device ID signal Svi, the electronic key 2 verifies the in-vehicle device ID. When the electronic key 2 accomplishes verification of the vehicle device ID, the electronic key 2 transmits an acknowledgement signal Sack2 to the vehicle 1.

Then, the verification ECU 4 transmits a challenge Sch to the electronic key 2 from the vehicle exterior LF transmitter 8 to perform challenge-response verification. The challenge Sch includes a challenge code and a key number. The challenge code is changed for each transmission. The key number indicates the number of the electronic key 2 in order of registration to the vehicle 1. Upon receipt of the challenge Sch, the electronic key 2 first performs key number verification. When the key number is verified, the electronic key 2 performs a calculation with the received challenge code and the encryption key Kcr of the electronic key 2 to generate a response code. The electronic key 2 then transmits a response Srs, including the response code and the electronic key ID of the electronic key 2, to the vehicle 1 from, for example, the UHF transmitter 13. In the same manner as the electronic key 2, upon receipt of the response Srs from the electronic key 2, the verification ECU 4 of the vehicle 1 performs a calculation with the received challenge code and the encryption key Kcr of the electronic key 2 to generate a response code. Then, the verification ECU 4 uses the generated response code to verify the response code received from the electronic key 2 (response verification). Further, the verification ECU 4 determines whether or not the electronic key ID from the electronic key 2 is correct (electronic key ID verification). When the response verification and the electronic key ID verification are both accomplished, the verification ECU 4 determines that smart verification (vehicle external smart verification) has been accomplished and permits or performs locking or unlocking of the vehicle doors with the body ECU 5.

When, for example, a courtesy switch (not shown) detects the entrance of a driver into the vehicle 1, the verification ECU 4 transmits a wake signal Swk to the vehicle interior communication area from the vehicle interior LF transmitter 8 and starts in-vehicle smart communication. Preferably, the vehicle interior communication area is formed to extend throughout the entire interior of the vehicle 1. The electronic key 2 that has received the wake signal Swk in the vehicle 1 performs vehicle interior smart verification with the verification ECU 4. When vehicle interior smart verification is accomplished, the verification ECU 4 permits power and engine-related operations with an engine switch 15.

The immobilizer system performs wireless communication between the vehicle 1 and the electronic key 2 within a short distance (e.g., communication distance of approximately ten centimeters) to verify the electronic key 2. The electronic key 2 may be driven by induced power generated from immobilizer system radio waves (e.g., LF radio waves) transmitted from the vehicle 1. This allows the electronic key 2 to perform immobilizer system communication without a power supply. The short-distance wireless communication may be performed, for example, in compliance with a communication standard such as the near-field communication (NFC) standard.

An electronic key registration system 16 that registers the electronic key 2 to the vehicle 1 will now be described. As shown in Fig. 1, the verification ECU 4 and the key controller 11 respectively include registration units 17 and 18 that perform key registration. In the illustrated example, the electronic key registration system 16 registers the electronic key 2 to the vehicle 1 with a registration tool 19, which is wire-connected to the vehicle 1 and operated by a serviceman. The registration of the electronic key 2 may be an initial registration, which is for registering an electronic key to the vehicle 1 when the vehicle 1 is manufactured at a factory, and an additional registration, which is for registering (supplementing) an electronic key to the vehicle 1 after the vehicle 1 is shipped out of a factory. An electronic key registered in the manufacturing stage may be referred to as an initially registered electronic key 2a. An electronic key additionally registered subsequent to the manufacturing stage may be referred to as an additional electronic key 2b or an extra electronic key.

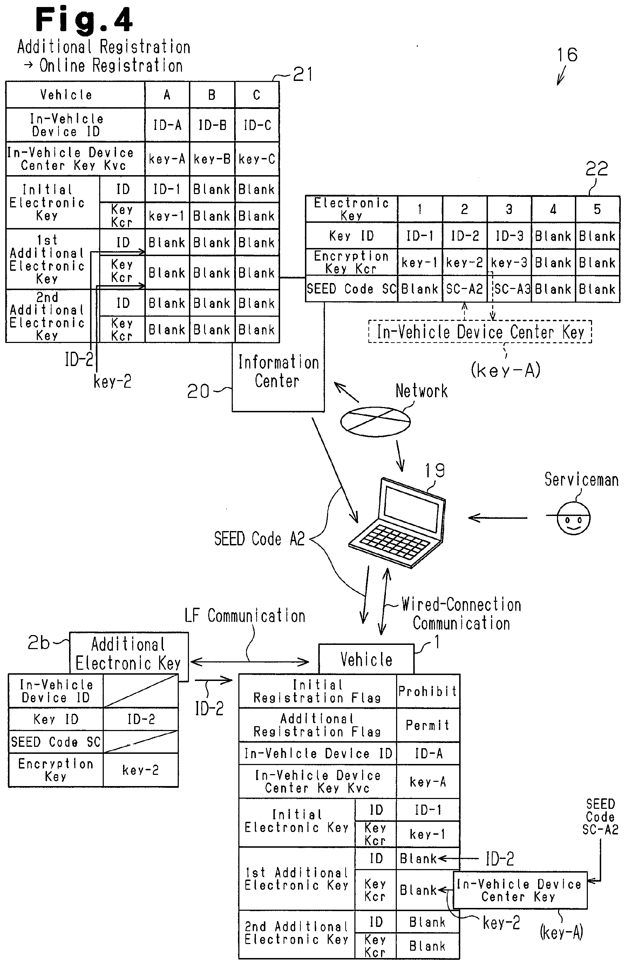

Referring to Fig. 4, the registration tool 19 is capable of accessing an information center 20 through network communication. The network communication may be, for example, Internet protocol (IP) communication. In a preferred example, the registration tool 19 may be wirelessly connected to a network such as the Internet. The registration tool 19 is connected by a wire, such as a communication cable, to the vehicle 1 to be communicable with the vehicle 1. When registering the electronic key 2 to the vehicle 1, the vehicle 1 and the electronic key 2 may perform near-distance LF bidirectional communication.

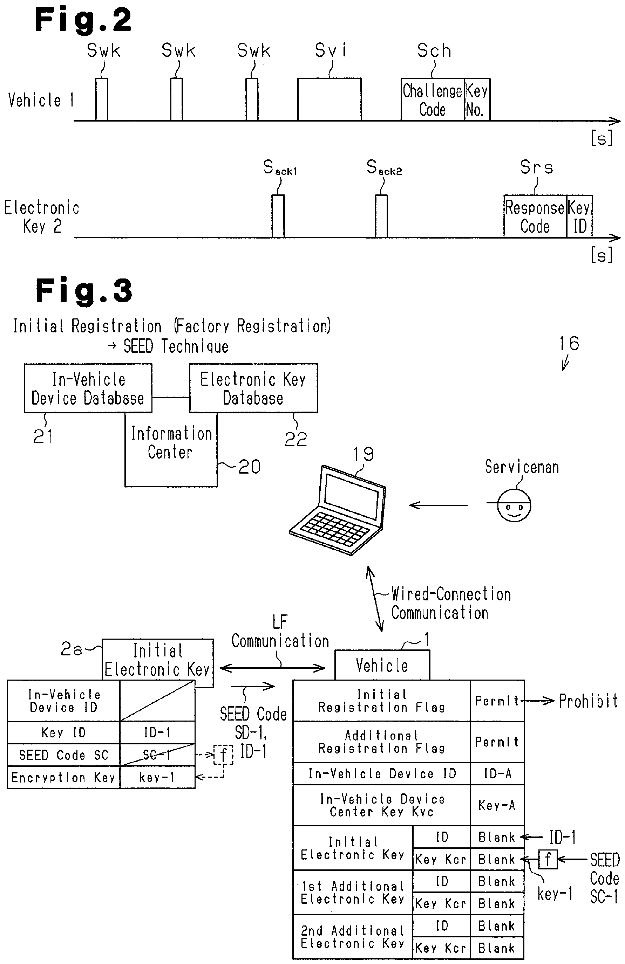

The initial registration will now be described with reference to Fig. 3. The initial registration is performed in a manufacturing factory or the like of the vehicle 1. A SEED registration technique may be employed for the initial registration. An electronic key 2a used in the SEED registration technique includes a memory 11a that stores a SEED code SC-1 as an encryption key generation code when the electronic key 2a is manufactured. When an electronic key is registered to the vehicle in accordance with the SEED registration technique, an encryption key "key-1" is generated in a computation performed with the SEED code SC-1 and an encryption key generation logic f and stored in advance in the memory 11a of the electronic key 2a. The verification ECU 4 stores an encryption key generation logic f identical to the one registered to the electronic key 2a in the memory 4a. The SEED code is one example of an encryption key generation code. The key registration according to the SEED registration technique may be performed when the registration tool 19 is connected to the information center 20 and when the registration tool 19 is disconnected from the information center 20.

The information center 20 includes an in-vehicle device database 21 and an electronic key database 22. The in-vehicle device database 21 stores the in-vehicle device ID in association with an electronic key for each vehicle 1 (verification ECU 4). The electronic key database 22 stores an electronic key ID, an encryption key Kcr, and a SEED code in association with one another for each electronic key 2.

In the SEED registration technique, the electronic key 2a transmits the SEED code SC-1 to generate an encryption key Kcr "key-1" that is to be registered for the initially registered electronic key 2a. For example, the verification ECU 4 registers an electronic key ID "ID-1" that is received from the electronic key 2a. The verification ECU 4 performs a computation with the SEED code SC-1 received from the electronic key 2a and the encryption key generation logic f to generate the encryption key "key-1". Then, the verification ECU 4 registers the generated encryption key "key-1" to the vehicle 1. After the SEED code SC-1 is transmitted to the vehicle 1, the SEED code SC-1 is deleted from the memory 11a of the electronic key 2a. The electronic key 2a receives an in-vehicle ID "ID-A" from the vehicle 1 and stores the in-vehicle ID in the memory 11a during the initial registration. When the registration of the electronic key 2a is completed, the verification ECU 4 switches an initial registration flag from "permit" to "prohibit" thereby prohibiting subsequent initial registration.

After the registration of the electronic key 2a to the vehicle 1 is completed, the in-vehicle device database 21 and the electronic key database 22, which are managed by the information center 20, are updated. For an initial registration, the registration tool 19 is not connected to the information center 20 in real time. Thus, after the initial registration is completed, the registration tool 19 is connected to the information center 20 at a certain time to update the in-vehicle device database 21 and the electronic key database 22.

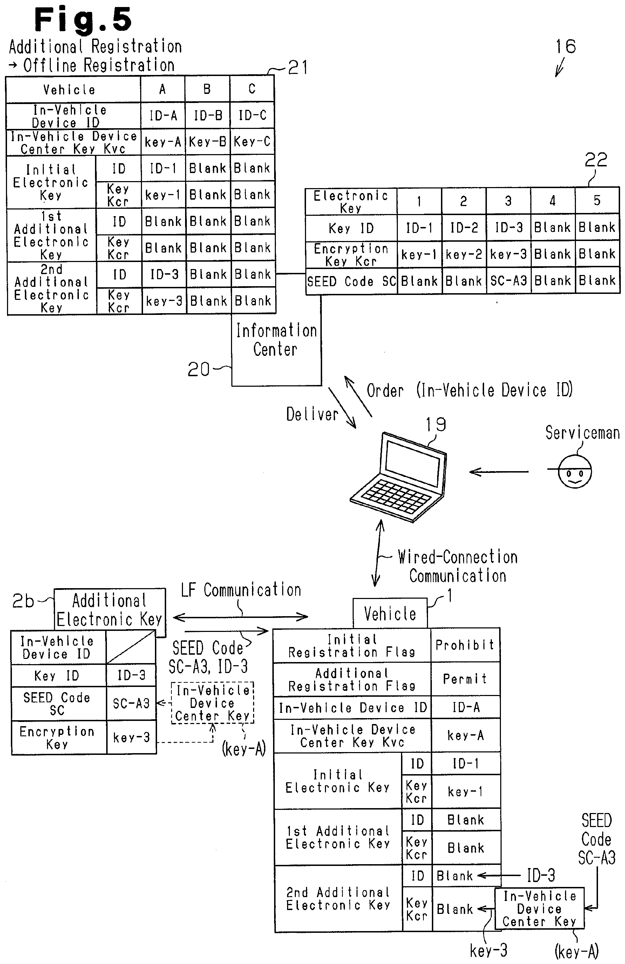

The additional registration will now be described with reference to Figs. 4 and 5. The additional registration is performed online, as shown in Fig. 4, or offline, as shown in Fig. 5, from a car dealer or the like. When the registration tool 19 is able to access the information center 20 through the network, online registration is performed. When the registration tool 19 is not able to access the information center 20 through the network, offline registration is performed.

When online registration is performed, the registration tool 19 accesses the information center 20, obtains various types of data required to register the additional electronic key 2b to the vehicle 1, and registers the additional electronic key 2b to the vehicle 1 using the obtained data. In this case, an in-vehicle device center key Kvc used for the additional registration of the electronic key 2b is registered to the memory 4a of the verification ECU 4. The vehicle 1 and the information center 20 both use the in-vehicle device center key Kvc, which is an encryption key, during key registration. Each verification ECU 4 (vehicle 1) is assigned with a different in-vehicle device center key Kvc. The in-vehicle device center key Kvc is an encryption key that is in compliance with, for example, the Advanced Encryption Standard (AES).

In the example of Fig. 4, the in-vehicle device database 21 stores a table including a vehicle row, an in-vehicle device ID row, an in-vehicle device center key row, an electronic key ID row, and an encryption key row. The electronic key ID row and the encryption key row are provided for each registered electronic key. The electronic key database 22 stores a table including an electronic key row, an electronic key ID row, an encryption key row, and a SEED code row. The SEED code row stores a SEED code generated by the information center 20 by performing a computation with an encryption key Kcr and a corresponding in-vehicle device center key Kvc

During online registration, when the verification ECU 4 receives an additional registration command for the electronic key 2b from the registration tool 19, the verification ECU 4 obtains the electronic key ID "ID-2" from the electronic key 2b and stores the electronic key ID in the memory 4a. Further, the verification ECU 4 sends a SEED generation request to the information center 20 through the registration tool 19 to request for the generation of the SEED code for the electronic key 2b that is the registration subject. The SEED generation request includes the electronic key ID "ID-2" received from the electronic key 2b and the in-vehicle device ID "ID-A" assigned to the vehicle 1. The information center 20 refers to the in-vehicle device database 21, locates the encryption key "key-2" corresponding to the electronic key ID "ID-2", and performs a computation using "key-2" and "key-A" to generate the SEED code of "SC-A2". The information center 20 provides the generated SEED code "SC-A2" to the verification ECU 4 through the registration tool 19. The verification ECU 4 performs a decoding computation with the SEED code "SC-A2" obtained from the information center 20 and the in-vehicle device center key "key-A" held by the verification ECU 4 to generate the encryption key "key-2". Then, the verification ECU 4 stores the encryption key "key-2" in the memory 4a. Further, the electronic key 2b stores the in-vehicle device ID "ID-A" received from the vehicle during the additional registration in the memory 11a.

The information center 20 stores the electronic key ID "ID-2" for the additionally registered electronic key 2b included in the SEED generation request. In this regard, the SEED generation request is received from the registration tool 19 on the key ID row in the in-vehicle device database 21. Further, after sending the SEED code "SC-A2" to the registration tool 19, the information center 20 stores the encryption key "key-2" for the electronic key 2b on the encryption key row in the in-vehicle device database 21.

During offline registration, the registration tool 19 registers the electronic key 2b to the vehicle 1 without accessing the information center 20. A SEED code "SC-A3", which is encoded with the in-vehicle device center key Kvc, is stored in advance in the memory 11a of the electronic key 2b used for offline registration. Further, a serviceman sends a physical order, which includes the in-vehicle device ID, to the information center 20 in advance. Then, the serviceman or dealer receives the additional electronic key 2b from the information center 20 in response.

Further, during offline registration, when receiving an additional registration command for the electronic key 2b from the registration tool 19, the verification ECU 4 obtains the electronic key ID of "ID-3" and the SEED code of "SC-A3" from the additional electronic key 2b. The verification ECU 4 stores the electronic key ID of "ID-3" obtained from the electronic key 2b in the memory 11a. The verification ECU 4 also performs a decoding computation with the SEED code "SC-A3", that is obtained from the electronic key 2b, and the in-vehicle device center key "key-A", that is held by the verification ECU 4, to generate an encryption key "key-3". The verification ECU 4 then stores the encryption key "key-3" in the memory 4a.

The electronic key registration system 16 includes a monitoring unit and a registration invalidation unit. The monitoring unit monitors whether or not electronic key registration has been attempted during a certain permissible period. The registration invalidation unit prohibits registration of the electronic key 2 to the vehicle 1 when the permissible period ends. The monitoring unit measures an elapsed time Tx from when the electronic key 2 or the verification ECU 4 is manufactured to monitor whether the elapsed time Tx measured when electronic key registration is attempted is in the permissible period. In accordance with the monitoring result of the monitoring unit, the registration invalidation unit prohibits registration with the electronic key 2 when the measured elapsed time Tx is not in the permissible period. In the example of Fig. 1, the electronic key 2 and the verification ECU 4 each include a monitoring unit and an invalidation unit.

The verification ECU 4 includes a monitoring unit 23 that monitors the elapsed time Tx from when the verification ECU 4 is manufactured. Further, the verification ECU 4 includes a registration invalidation unit 25 that validates or invalidates key registration in accordance with the monitoring result of the monitoring unit 23.

The monitoring unit 23 may hold a threshold R that indicates the permissible registration period during which registration of the electronic key 2 to the verification ECU 4 is permitted. The monitoring unit 23 may include a timer 24 that measures the elapsed time Tx from when the verification ECU 4 is manufactured. The monitoring unit 23 monitors whether or not the elapsed time measured by the timer 24 has exceeded the threshold R. When manufacturing of the verification ECU 4 is completed and the timer 24 receives a count start signal from an external device, the timer 24 starts to measure time. In the preferred example, the monitoring unit 23 includes a first threshold Ra, which indicates the permissible period for initial registration, and a second threshold Rb, which indicates the permissible period for additional registration. In the preferred example, the first threshold Ra is set for a relatively short permissible registration period, and the second threshold Rb (>Ra) is set for a relatively long permissible registration period. The monitoring unit 23 provides the registration invalidation unit 25 with an initial registration invalidation request when the elapsed time Tx exceeds the first threshold Ra. Further, the monitoring unit 23 provides the registration invalidation unit 25 with an additional registration invalidation request when the elapsed time Tx exceeds the second threshold Rb. In one example, the threshold R (Ra and Rb) is at least one value indicating when the permissible registration period ends. The threshold R (Ra and Rb) indicating the permissible registration period may be stored in the memory 4a.

When an initial registration invalidation request is received from the monitoring unit 23, the registration invalidation unit 25 invalidates an initial registration performed by the verification ECU 4. In the present example, the registration invalidation unit switches the initial registration flag from "permit" to "prohibit" thereby prohibiting the initial registration. Further, when an additional registration invalidation request is received from the monitoring unit 23, the registration invalidation unit 25 invalidates an additional registration performed by the verification ECU 4. In the present example, the registration invalidation unit switches the initial registration flag from "permit" to "prohibit" thereby prohibiting the additional registration.

The key controller 11 of the electronic key 2 also includes a monitoring unit 26 and a registration invalidation unit 28 like the verification ECU 4. The monitoring unit 26 may hold a threshold K that indicates the permissible registration period. The monitoring unit 26 may include a timer 27 that measures the elapsed time Tx from when the electronic key 2 is manufactured. The monitoring unit 26 compares the elapsed time Tx, which is measured by the timer 27, with the threshold K. When the elapsed time Tx exceeds a first threshold Ka, the monitoring unit 26 provides the registration invalidation unit 28 with an initial registration invalidation request when the elapsed time Tx is greater than the first threshold Ka. Further, the monitoring unit 26 provides the registration invalidation unit 28 with an additional registration invalidation request when the elapsed time Tx exceeds a second threshold Kb (> Ka). In one example, the threshold K (Ka and Kb) includes at least one value that indicates when the permissible registration period ends. The threshold R (Ra and Rb) that indicates the permissible registration period may be stored in the memory 11a.

When an initial registration invalidation request is received from the monitoring unit 26, the registration invalidation unit 28 invalidates an initial registration performed by the electronic key 2. For example, when registration of the electronic key 2 is invalidated, the electronic key 2 does not perform initial registration even when an initial registration request is received from the verification ECU 4. Further, when an additional registration invalidation request is received from the monitoring unit 26, the registration invalidation unit 28 invalidates an additional registration performed by the electronic key 2. For example, when registration of the electronic key 2 is invalidated, the electronic key 2 does not perform additional registration even when an additional registration request is received from the verification ECU 4. The initial registration request and the additional registration request may each be, for example, a command from the verification ECU 4 to the electronic key 2 requesting for the electronic key ID or the like.

An initial registration of an electronic key will now be described.

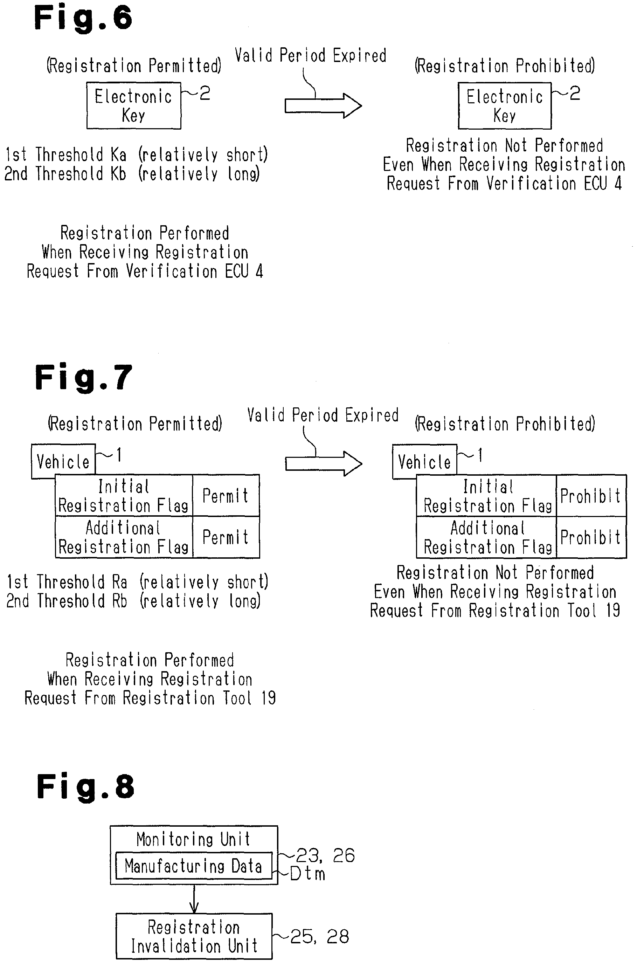

Referring to Fig. 6, the electronic key 2 is allowed to perform key registration (initial registration and additional registration) only during a fixed period from when the electronic key 2 is manufactured. For example, the electronic key 2 is allowed to perform an initial registration only during a period from when the electronic key 2 is manufactured to when the elapsed time Tx reaches the first threshold Ka. Further, the electronic key 2 is allowed to perform additional registration only during a period until the elapsed time Tx reaches the second threshold Kb.

The monitoring unit 26 of the electronic key 2 monitors the elapsed time Tx measured by the timer 27. When the elapsed time Tx exceeds the first threshold Ka, the monitoring unit 26 provides the registration invalidation unit 28 with an initial registration invalidation request. When receiving the initial registration invalidation request from the monitoring unit 26, the registration invalidation unit 28 prohibits initial registration with the electronic key 2 (registration unit 18). In this case, the electronic key 2 does not perform an initial registration even when an initial registration request is received from the verification ECU 4.

Further, when the elapsed time Tx exceeds the second threshold Kb, the monitoring unit 26 provides the registration invalidation unit 28 with an additional registration invalidation request. When receiving the additional registration invalidation request from the monitoring unit 26, the registration invalidation unit 28 prohibits additional registration with the electronic key 2 (registration unit 18). In this case, the electronic key 2 does not perform an additional registration even when an additional registration request is received from the verification ECU 4.

An example shown in Fig. 7 will now be described. The verification ECU 4 is permitted to perform key registration (initial registration and additional registration) for a fixed period from when the vehicle 1 is manufactured. For example, the verification ECU 4 is permitted to perform initial registration for a period from when the vehicle 1 is manufactured to when the elapsed time Tx reaches the first threshold Ra. Further, the verification ECU 4 is permitted to perform additional registration for a period from when the vehicle 1 is manufactured to when the elapsed time Tx reaches the second threshold Rb.

The monitoring unit 23 of the verification ECU 4 measures the elapsed time Tx from when the vehicle 1 is manufactured with the timer 24. When the elapsed time Tx exceeds the first threshold Ra, the monitoring unit 23 provides the registration invalidation unit 25 with the initial registration invalidation request. When receiving the initial registration invalidation request from the monitoring unit 23, the registration invalidation unit 25 switches the initial registration flag from "permit" to "prohibit" and prohibits initial registration with the verification ECU 4 (registration unit 17). In this case, the verification ECU 4 does not perform initial registration even when an initial registration request is received from the registration tool 19.

The thresholds R and K may be referred to as time period values indicating the time period during which the key ID of the electronic key 2 may be registered. The monitoring units and the registration invalidation units may be referred to as time-limited registration circuits that permit registration of an electronic key for only a limited time period.

The above embodiment has the advantages described below.
(1) The registration of the electronic key 2 to the verification ECU 4 is only during the permissible period for key registration. When the permissible period expires, the electronic key 2 cannot be registered to the verification ECU 4. This reduces or obviates unauthorized registration of the electronic key 2. Further, the registration of a correct electronic key is performed, for example, on a manufacturing line before the electronic key and the vehicle is shipped out of a factory. Thus, there would be no inconveniences caused by the setting of the permissible period.
(2) The initial registration of the electronic key 2 is performed in accordance with the SEED code technique that provides a time limit to the registration. For example, during electronic key registration, the electronic key 2 sends a SEED code, generated by encoding an encryption key, to the verification ECU 4. The verification ECU 4 registers the encryption key generated by decoding the SEED code. The encryption key is not sent to the verification ECU 4 from the electronic key 2. Thus, the SEED code technique has a high level of confidentiality. This reduces or obviates unauthorized registration of the electronic key 2.
(3) The elapsed time Tx is measured from when the electronic key 2 or the verification ECU 4 is manufactured. When the elapsed time Tx exceeds the thresholds K and R, electronic key registration is prohibited. Since the elapsed time Tx is measured with high accuracy, the timing for prohibiting electronic key registration is optimally set with high accuracy.
(4) The initial registration thresholds Ka and Ra and the additional registration thresholds Kb and Rb may be set separately. Thus, the permissible period for initial registration may differ from the permissible period for additional registration.
(5) The electronic key 2 and the verification ECU 4 each include a monitoring unit and a registration invalidation unit. Thus, even when the electronic key 2 or the verification ECU 4 is stolen, the stolen electronic key 2 or stolen verification ECU 4 cannot be registered after the permissible period expires. This hinders unauthorized use of the stolen electronic key 2 or stolen verification ECU 4.
(6) The registration invalidation units 25 and 28 set flags prohibiting electronic key registration based on the elapsed time Tx measured by the timers 24 and 27 from when the electronic key 2 and the verification ECU 4 are manufactured. This allows for accurate switching to a condition prohibiting electronic key registration.

The elapsed time Tx from manufacturing does not have to be measured by the timers 24 and 27. Instead, an initial value may be decremented from the present time. Referring to Fig. 8, for example, manufacturing data Dtm is stored when the electronic key 2 or the verification ECU 4 is manufactured. When the manufacturing data Dtm includes numerical values representing the manufacturing date and time, the monitoring unit may determine whether or not the registration is performed during the permissible period based on when electronic key registration is performed, the manufacturing data Dtm, and a threshold. When the manufacturing data Dtm is the initial value, the monitoring unit periodically decrements the initial value to monitor the expiration of the permissible period.

A monitoring unit may recognize when registration is performed from a time signal provided by an external device. In this case, the timers 24 and 27 may be omitted. This reduces power consumption for driving timers.

The determination of whether or not a key registration is performed during a permissible period does not have to be based on the measurements of the timers 24 and 27 or the manufacturing data Dtm.

In the preferred example, the measurement of the elapsed time Tx starts from when the electronic key 2 or the verification ECU 4 is manufactured. Instead, the measurement of the elapsed time Tx may start from a different incident.

As long as the encryption key generation code is generated by encrypting the encryption key Kcr, the encryption key generation code is not limited to a SEED code.

The encryption communication used for ID verification is not limited to challenge response verification, and different encryption verifications may be employed.

In the preferred example, the threshold K and the threshold R are different values. However, the threshold K and the threshold R may be the same value.

In the preferred example, the threshold K takes a different value for initial registration and additional registration but may take the same value. The same applies for the threshold R.

The invalidation unit may be arranged in only one of the verification ECU 4 and the electronic key 2.

The invalidation unit may be arranged in a plurality of ECUs in the vehicle, such as the verification ECU 4 and a steering wheel lock ECU.

In the preferred example, the key registration registers both of the electronic key ID and the encryption key Kcr. However, the key registration may register only one of the electronic key ID and the encryption key Kcr.

The communication between the vehicle 1 and the registration tool 19 does not have to be performed through wired connection and may be performed through a wireless connection.

Registration invalidation does not have to be achieved by switching the initial registration flag or the additional registration flag of the verification ECU 4 or by disabling registration with the electronic key 2. Registration invalidation may be achieved through other schemes.

The vehicle 1 and the electronic key 2 do not have to communicate with the information center 20 through the registration tool 19. For example, the vehicle 1 and the electronic key 2 may be provided with a network communication function so that the vehicle 1 and the electronic key 2 directly communicate with the information center 20.

The electronic key registration system 16 does not have to use a SEED code to perform registration. The registration may be performed in any manner as long as the electronic key 2 may be registered to the verification ECU 4 (vehicle 1).

The electronic key registration system 16 does not have to use the registration tool 19 and may be configured by, for example, the vehicle 1, the electronic key 2, and the information center 20. 20.

The electronic key registration system 16 is not limited to a system that performs both initial registration and additional registration. The electronic key registration system 16 may be a system that performs only one of initial registration and additional registration.

The electronic key registration system 16 is not limited to the vehicle 1 and is applicable to other devices and apparatuses.

The controller is not limited to the verification ECU 4 and may be another ECU such as a steering wheel lock ECU that manages the operation of an electric steering wheel lock.

A plurality of keys may be registered during initial registration.

Online registration does not have to be performed as illustrated in the above embodiment. For example, the electronic key ID may be registered to the electronic key 2 via the vehicle 1 from the registration tool 19.

The encryption key Kcr does not have to be stored in advance in the electronic key 2. For example, a center key associated with the electronic key and the information center 20 may be registered to the electronic key 2 and the information center 20, and the encryption key Kcr may be encoded with the center key for transmission The present examples and embodiments are to be considered as illustrative and not restrictive, and the invention is not to be limited to the details given herein, but may be modified within the scope as defined by the appended claims.

## Claims

1. An electronic key registration system (16) comprising an electronic key (2) and a verification electronic control unit (4), the electronic key registration system (16) registering a key ID and an encryption key (Kcr) of the electronic key (2) to the verification electronic control unit (4) installed in a communication subject (1) that communicates with the electronic key (2) through wireless connection,
wherein the verification electronic control unit (4) includes a monitoring unit (23) and a registration invalidation unit (25), and the electronic key (2) includes a monitoring unit (26) and a registration invalidation unit (28), each of the monitoring unit (23) of the verification electronic control unit (4) and the monitoring unit (26) of the electronic key (2) is configured to monitor whether or not registration of the electronic key (2) is attempted in a certain permissible period, and each of the registration invalidation unit (25) of the verification electronic control unit (4) and the registration invalidation unit (28) of the electronic key (2) is configured to prohibit registration of the electronic key (2) to the communication subject (1) when the permissible period expires,
wherein the monitoring unit (23) of the verification electronic control unit (4) is configured to measure the elapsed time (Tx) from when the verification electronic control unit (4) is manufactured and monitor whether or not registration of the electronic key (2) is attempted when the elapsed time (Tx) is in the permissible period, and
wherein the monitoring unit (26) of the electronic key (2) is configured to measure the elapsed time (Tx) from when the electronic key (2) is manufactured and monitor whether or not registration of the electronic key (2) is attempted when the elapsed time (Tx) is in the permissible period.

2. The electronic key registration system (16) according to claim 1, wherein
the monitoring unit (23) of the verification electronic control unit (4) is configured to hold at least one threshold (R) that is used to set the permissible period, and the monitoring unit (26) of the electronic key (2) is configured to hold at least one threshold (K) that is used to set the permissible period, and
the at least one thresholds (K, R) include a first threshold and a second threshold, respectively,
the first threshold is used to set an initial registration permissible period that permits registration of an initially registered electronic key (2a) to the verification electronic control unit (4) before the communication subject (1) is shipped out of a factory, the initially registered electronic key (2a) being an electronic key registered in the manufacturing stage,
the second threshold is used to set an additional registration permissible period that permits registration of an additional electronic key (2b) to the verification electronic control unit (4) after the communication subject (1) is shipped out of the factory, the additional electronic key (2b) being an electronic key registered subsequent to the manufacturing stage,
and
the initial registration permissible period and the additional registration permissible period may be separately set.

3. The electronic key registration system (16) according to any one of claims 1 to 2, wherein
the electronic key (2) is configured to store an encryption key generation code (SC-1) for generating an encryption key (Kcr) used for verification during the wireless connection communication, and
registration of the electronic key (2) includes
generating the encryption key (Kcr) with the electronic key (2) by performing a computation using the encryption key generation code (SC-1) and an encryption key generation logic (f), wherein the encryption key generation logic (f) is registered to the electronic key (2a),
storing the encryption key (Kcr) in the electronic key (2),
storing identification information of the communication subject (1) and the encryption key generation logic (f) in the verification electronic control unit (4),
obtaining the encryption key generation code (SC-1) from the electronic key (2) with the verification electronic control unit (4),
generating the encryption key (Kcr) with the verification electronic control unit (4) from the encryption key generation logic (f) and the encryption key generation code (SC-1) that are stored in the verification electronic control unit (4), and
storing the encryption key (Kcr) in the verification electronic control unit (4).

4. The electronic key registration system (16) according to any one of claims 1 to 3, wherein each of the monitoring unit (23) of the verification electronic control unit (4) and the monitoring unit (26) of the electronic key (2) is configured to use a timer (24, 27) to measure time and determine whether or not registration of the electronic key (2) is performed in the permissible period.

5. The electronic key registration system (16) according to any one of claims 1 to 4, wherein each of the monitoring unit (23) of the verification electronic control unit (4) and the monitoring unit (26) of the electronic key (2) is configured to monitor whether or not registration of the electronic key (2) is attempted in the permissible period based on manufacturing data (Dtm) stored in one of the verification electronic control unit (4) and the electronic key (2).

## Patentansprüche

1. System (16) zum Registrieren eines elektronischen Schlüssels mit einem elektronischen Schlüssel (2) und einer elektronischen Verifikationssteuerungseinheit (4), wobei das System (16) zum Registrieren des elektronischen Schlüssels eine Schlüssel-ID und einen Verschlüsselungsschlüssel (Kcr) des elektronischen Schlüssels (2) in der elektronischen Verifikationssteuerungseinheit (4), die in einem Kommunikationssubjekt (1) installiert ist, das mit dem elektronischen Schlüssel (2) über eine drahtlose Verbindung kommuniziert, registriert,
wobei die elektronische Verifikationssteuerungseinheit (4) eine Überwachungseinheit (23) und eine Registrierungsinvalidierungseinheit (25) umfasst, und der elektronische Schlüssel (2) eine Überwachungseinheit (26) und eine Registrierungsinvalidierungseinheit (28) umfasst, wobei die Überwachungseinheit (23) der elektronischen Verifikationssteuerungseinheit (4) und die Überwachungseinheit (26) des elektronischen Schlüssels (2) jeweils dazu konfiguriert sind, zu überwachen, ob eine Registrierung des elektronischen Schlüssels (2) in einer bestimmten erlaubten Periode versucht wird oder nicht, und die Registrierungsinvalidierungseinheit (25) der elektronischen Verifikationssteuerungseinheit (4) und die Registrierungsinvalidierungseinheit (28) des elektronischen Schlüssels (2) jeweils dazu konfiguriert sind, eine Registrierung des elektronischen Schlüssels (2) in dem Kommunikationssubjekt (1) zu verhindern, wenn die erlaubte Periode abläuft,
wobei die Überwachungseinheit (23) der elektronischen Verifikationssteuerungseinheit (4) dazu konfiguriert ist, die abgelaufene Zeit (Tx) von dem Zeitpunkt, wenn die elektronische Verifikationssteuerungseinheit (4) hergestellt ist, zu messen, und zu überwachen, ob eine Registrierung des elektronischen Schlüssels (2) versucht wird, wenn die abgelaufene Zeit (Tx) in der erlaubten Periode liegt, oder nicht, und
wobei die Überwachungseinheit (26) des elektronischen Schlüssels (2) dazu konfiguriert ist, die abgelaufene Zeit (Tx) von dem Zeitpunkt, wenn der elektronische Schlüssel (2) hergestellt ist, zu messen, und zu überwachen ob eine Registrierung des elektronischen Schlüssels (2) versucht wird, wenn die abgelaufene Zeit (Tx) in der erlaubten Periode , oder nicht.

2. System (16) zum Registrieren eines elektronischen Schlüssels gemäß Anspruch 1, wobei
die Überwachungseinheit (23) der elektronischen Verifikationssteuerungseinheit (4) dazu konfiguriert ist, zumindest einen Schwellenwert (R) zu halten, der verwendet wird, um die erlaubte Periode einzustellen, und die Überwachungseinheit (26) des elektronischen Schlüssels (2) dazu konfiguriert ist, zumindest einen Schwellenwert (K) zu halten, der verwendet wird, um die erlaubte Periode einzustellen, und
die zumindest einen Schwellenwerte (K, R) entsprechend einen ersten Schwellenwert und einen zweiten Schwellenwert aufweisen,
der erste Schwellenwert verwendet wird, um eine anfängliche Registrierungserlaubnisperiode einzustellen, die eine Registrierung eines anfänglich registrierten elektronischen Schlüssels (2a) in der elektronischen Verifikationssteuerungseinheit (4) erlaubt, bevor das Kommunikationssubjekt (1) von einer Fabrik versendet wird, wobei der anfänglich registrierte elektronische Schlüssel (2a) ein elektronischer Schlüssel ist, der in der Herstellungsstufe registriert ist,
der zweite Schwellenwert verwendet wird, um eine zusätzliche Registrierungserlaubnisperiode einzustellen, die eine Registrierung eines zusätzlichen elektronischen Schlüssels (2b) in der elektronischen Verifikationssteuerungseinheit (4) erlaubt, nachdem das Kommunikationssubjekt (1) von der Firma versendet ist, wobei der zusätzliche elektronische Schlüssel (2b) ein elektronischer Schlüssel ist, der nachfolgend zu der Herstellungsstufe registriert wird, und
die anfängliche Registrierungserlaubnisperiode und die zusätzliche Registrierungserlaubnisperiode separat eingestellt werden können.

3. System (16) zum Registrieren eines elektronischen Schlüssels gemäß einem der Ansprüche 1 und 2, wobei
der elektronische Schlüssel (2) dazu konfiguriert ist, einen Verschlüsselungsschlüsselerzeugungscode (SC-1) zum Erzeugen eines Verschlüsselungsschlüssels (Kcr), der zur Verifikation während der Drahtlosverbindungskommunikation verwendet wird, zu speichern, und
die Registrierung des elektronischen Schlüssels (2) aufweist
Erzeugen des Verschlüsselungsschlüssels (Kcr) mit dem elektronischen Schlüssel (2) durch Durchführen einer Berechnung unter Verwendung des Verschlüsselungsschlüsselerzeugungscodes (SC-1) und einer Verschlüsselungsschlüsselerzeugungslogik (f), wobei die Verschlüsselungsschlüsselerzeugungslogik (f) in dem elektronischen Schlüssel (2a) registriert ist,
Speichern des Verschlüsselungsschlüssels (Kcr) in dem elektronischen Schlüssel (2),
Speichern von Identifikationsinformationen des Kommunikationssubjekts (1) und der Verschlüsselungsschlüsselerzeugungslogik (f) in der elektronischen Verifikationssteuerungseinheit (4),
Erhalten des Verschlüsselungsschlüsselerzeugungscodes (SC-1) von dem elektronischen Schlüssel (2) mit der elektronischen Verifikationssteuerungseinheit (4),
Erzeugen des Verschlüsselungsschlüssels (Kcr) mit der elektronischen Verifikationssteuerungseinheit (4) von der Verschlüsselungsschlüsselerzeugungslogik (f) und dem Verschlüsselungsschlüsselerzeugungscode (SC-1), die in der elektronischen Verifikationssteuerungseinheit (4) gespeichert sind, und
Speichern des Verschlüsselungsschlüssels (Kcr) in der elektronischen Verifikationssteuerungseinheit (4).

4. System (16) zum Registrieren eines elektronischen Schlüssels gemäß einem der Ansprüche 1 bis 3, wobei die Überwachungseinheit (23) der elektronischen Verifikationssteuerungseinheit (4) und die Überwachungseinheit (26) des elektronischen Schlüssels (2) jeweils dazu konfiguriert sind, einen Zeitnehmer (24, 27) zu verwenden, um eine Zeit zu messen, und zu bestimmen, ob eine Registrierung des elektronischen Schlüssels (2) in der erlaubten Periode durchgeführt wird oder nicht.

5. System (16) zum Registrieren eines elektronischen Schlüssels gemäß einem der Ansprüche 1 bis 4, wobei die Überwachungseinheit (23) der elektronischen Verifikationssteuerungseinheit (4) und die Überwachungseinheit (26) der elektronischen Steuerungseinheit (2) jeweils dazu konfiguriert sind, zu überwachen, ob eine Registrierung des elektronischen Schlüssels (2) in der erlaubten Periode versucht wird oder nicht, basierend auf Herstellungsdaten (Dtm), die in einer der elektronischen Verifikationssteuerungseinheit (4) und des elektronischen Schlüssels (2) gespeichert sind.

## Revendications

1. Système d'enregistrement de clé électronique (16) comprenant une clé électronique (2) et une unité de commande électronique de vérification (4), le système d'enregistrement de clé électronique (16) enregistrant un identificateur de clé et une clé de chiffrement (Kcr) de la clé électronique (2) pour l'unité de commande électronique de vérification (4) installée dans un objet de communication (1) qui communique avec la clé électronique (2) au moyen d'une connexion sans fil,
dans lequel l'unité de commande électronique de vérification (4) comporte une unité de surveillance (23) et une unité d'invalidation d'enregistrement (25), et la clé électronique (2) comporte une unité de surveillance (26) et une unité d'invalidation d'enregistrement (28), l'unité de surveillance (23) de l'unité de commande électronique de vérification (4) et l'unité de surveillance (26) de la clé électronique (2) sont configurées chacune pour surveiller si un enregistrement de la clé électronique (2) est tenté ou non dans un certain délai admissible, et l'unité d'invalidation d'enregistrement (25) de l'unité de commande électronique de vérification (4) et l'unité d'invalidation d'enregistrement (28) de la clé électronique (2) sont configurées chacune pour interdire l'enregistrement de la clé électronique (2) pour l'objet de communication (1) lorsque le délai admissible expire,
dans lequel l'unité de surveillance (23) de l'unité de commande électronique de vérification (4) est configurée pour mesurer le temps écoulé (Tx) depuis le moment où l'unité de commande électronique de vérification (4) a été fabriquée et surveiller si un enregistrement de la clé électronique (2) est tenté ou non lorsque le temps écoulé (Tx) se situe dans le délai admissible, et
dans lequel l'unité de surveillance (26) de la clé électronique (2) est configurée pour mesurer le temps écoulé (Tx) depuis le moment où la clé électronique (2) a été fabriquée et surveiller si un enregistrement de la clé électronique (2) est tenté ou non lorsque le temps écoulé (Tx) se situe dans le délai admissible.

2. Système d'enregistrement de clé électronique (16) selon la revendication 1, dans lequel :
l'unité de surveillance (23) de l'unité de commande électronique de vérification (4) est configurée pour conserver au moins un seuil (R) qui est utilisé pour fixer le délai admissible, et l'unité de surveillance (26) de la clé électronique (2) est configurée pour conserver au moins un seuil (K) qui est utilisé pour fixer le délai admissible, et
l'au moins un seuil (K, R) inclut un premier seuil et un second seuil, respectivement,
le premier seuil est utilisé pour fixer un délai admissible d'enregistrement initial qui permet l'enregistrement d'une clé électronique initialement enregistrée (2a) pour l'unité de commande électronique de vérification (4) avant que l'objet de communication (1) ne soit expédié depuis une usine, la clé électronique initialement enregistrée (2a) étant une clé électronique enregistrée au stade de la fabrication,
le second seuil est utilisé pour fixer un délai admissible d'enregistrement supplémentaire qui permet l'enregistrement d'une clé électronique supplémentaire (2b) pour l'unité de commande électronique de vérification (4) après que l'objet de communication (1) a été expédié depuis l'usine, la clé électronique supplémentaire (2b) étant une clé électronique enregistrée postérieurement au stade de la fabrication, et
le délai admissible d'enregistrement initial et le délai admissible d'enregistrement supplémentaire peuvent être fixés séparément.

3. Système d'enregistrement de clé électronique (16) selon l'une quelconque des revendications 1 et 2, dans lequel :
la clé électronique (2) est configurée pour stocker un code de génération de clé de chiffrement (SC-1) permettant d'engendrer une clé de chiffrement (Kcr) utilisée à des fins de vérification au cours de la communication de connexion sans fil, et
l'enregistrement de la clé électronique (2) inclut :
la génération de la clé de chiffrement (Kcr) avec la clé électronique (2) par réalisation d'un calcul à l'aide du code de génération de clé de chiffrement (SC-1) et d'une logique de génération de clé de chiffrement (f), dans lequel la logique de génération de clé de chiffrement (f) est enregistrée pour la clé électronique (2a),
le stockage de la clé de chiffrement (Kcr) dans la clé électronique (2),
le stockage d'informations d'identification de l'objet de communication (1) et de la logique de génération de clé de chiffrement (f) dans l'unité de commande électronique de vérification (4),
l'obtention du code de génération de clé de chiffrement (SC-1) à partir de la clé électronique (2) avec l'unité de commande électronique de vérification (4),
la génération de la clé de chiffrement (Kcr) avec l'unité de commande électronique de vérification (4) à partir de la logique de génération de clé de chiffrement (f) et du code de génération de clé de chiffrement (SC-1) qui sont stockés dans l'unité de commande électronique de vérification (4), et
le stockage de la clé de chiffrement (Kcr) dans l'unité de commande électronique de vérification (4).

4. Système d'enregistrement de clé électronique (16) selon l'une quelconque des revendications 1 à 3, dans lequel l'unité de surveillance (23) de l'unité de commande électronique de vérification (4) et l'unité de surveillance (26) de la clé électronique (2) sont configurées chacune pour utiliser un compteur de temps (24, 27) afin de mesurer le temps et de déterminer si un enregistrement de la clé électronique (2) est effectué ou non dans le délai admissible.

5. Système d'enregistrement de clé électronique (16) selon l'une quelconque des revendications 1 à 4, dans lequel l'unité de surveillance (23) de l'unité de commande électronique de vérification (4) et l'unité de surveillance (26) de la clé électronique (2) sont configurées chacune pour surveiller si un enregistrement de la clé électronique (2) est tenté ou non dans le délai admissible, sur la base de données de fabrication (Dtm) stockées dans l'unité de commande électronique de vérification (4) ou dans la clé électronique (2).
